# EUROPÄISCHE PATENTSCHRIFT

(11) **EP 3 699 438 B1**
(45) Veröffentlichungstag und Bekanntmachung des Hinweises auf die Patenterteilung: **13.03.2024**
(21) Anmeldenummer: 20153777.6
(22) Anmeldetag: 27.01.2020
(51) Int. Cl.: F15B 13/042, F15B 21/08, F15B 13/02, F15B 20/00

(54) **RÜCKSCHLAGVENTILSYSTEM MIT ELEKTRONISCHER KONTROLLE**
CHECK VALVE SYSTEM WITH ELECTRONIC CONTROL
SYSTÈME DE CLAPET ANTI-RETOUR À COMMANDE ÉLECTRONIQUE

(30) Priorität: 22.02.2019 IT 201900002599
(43) Veröffentlichungstag der Anmeldung: 26.08.2020
(73) Patentinhaber: Robert Bosch GmbH, 70442 Stuttgart (DE)
(72) Erfinder: Bello, Felice, 41124 Modena (IT); Ferraresi, Paolo, CAP 41013 Castelfranco Emilia, Modena (IT); Dotti, Francesco, 40014 Crevalcore (BO) (IT); Brucker, Marcel, 73079 Suessen (DE)

(56) Entgegenhaltungen:
- EP-A1- 0 404 271
- EP-A2- 1 338 802
- EP-B1- 0 404 271
- AU-A4- 2009 101 163
- CN-A- 109 139 613
- FR-A1- 2 497 851
- GB-A- 2 440 610
- US-A- 4 278 011
- US-A- 5 207 059
- US-A1- 2012 180 878
- US-B1- 6 293 181

## Beschreibung

Gegenstand der Erfindung ist ein Ventilsystem für Stellantriebe oder Hydraulikzylinder, das eine Ventileinheit umfasst.

Das System ist besonders geeignet für Maschinen wie Bagger, Hebezeuge, die den Vorschriften im Hinblick auf das Platzen oder Brechen eines Rohres für die Zufuhr des unter Druck stehenden Fluids entsprechen müssen.

Eine ähnliche Ventileinheit ist aufgrund der technischen Beschreibung "Compact Excavator Pipe-Rupture Valve - Series CFS" der Gesellschaft Bucher Hydraulics bekannt (Referenznummer:300-P-9050076-E-03/11.2009). Diese Ventileinheit ist direkt an einem Zylinder oder einem beliebigen anderen hydraulischen Stellantrieb durch einen zweiten Port befestigt. Ein Rohr oder Schlauch sind mit einem ersten Port verbunden, wobei das Rohr oder der Schlauch mit einer unter Druck stehenden Fluidquelle verbunden sind. Der dritte Port ist mit einem Tank verbunden. Wenn das Rohr bricht oder der Schlauch platzt, wird der erste Ventilsitz durch einen ersten Kolben auf fluiddichte Weise verschlossen. Während des Normalbetriebs ist die Position des ersten Kolbens mit einem Druck zur hydraulischen Steuerung, der auf das Vorsteuerventil wirkt, konstant regulierbar, sodass die Bewegung des Zylinders oder des Stellantriebs gesteuert werden kann.

Das Dokument DE 10 2014 204 070 A1 stellt eine Ventileinheit dar, die strukturelle Ähnlichkeiten mit der Ventileinheit aufweist, die zur Erfindung gehört. Der erste Kolben weist ebenfalls eine erste Öffnung und eine Steuerkammer auf. Der erste Kolben ist auf unterschiedliche Weise mit dem ersten und zweiten Port sowie mit dem Vorsteuerventil verbunden. Daher weist diese Ventileinheit nicht einmal die zuvor erklärte Funktionalität auf, die gemäß der Erfindung zwingend ist.

Die Patentanmeldung IT102017000096057, die nach dem Datum der Einreichung der vorliegenden Anmeldung veröffentlicht wird, beschreibt eine Ventileinheit, die den Vorteil aufweist, direkt von einem elektrischen Strom gesteuert werden zu können. Daher ist ihre Ausführung signifikant einfacher als jene der bestehenden Ventileinheit von Bucher. Die Bewegung des Zylinders kann auf sehr präzise Weise gesteuert werden. Die Ventileinheit ist sehr kompakt. Außerdem bleibt der erste Kolben im Fall des Bruches eines Rohres oder eines Schlauchs offen, wenn ein entsprechender Steuerstrom an die Ventileinheit abgegeben wird. Wenn ein solcher Bruch im Besonderen während der Bewegung des Stellantriebs auftritt, erhöht sich die Geschwindigkeit des Stellantriebs nur in irrelevantem Ausmaß und verdoppelt sich nicht unabhängig von den Betriebsbedingungen.

Gemäß der oben genannten Anmeldung ist ein Kern vorhanden, der zumindest teilweise von einer Spule umgeben ist, wobei ein Fluidstrom von der Steuerkammer zum ersten Port durch einen elektrischen Strom in der Spule regulierbar ist. Der oben genannte Fluidstrom ist vorzugsweise auf kontinuierliche Weise regulierbar. Die Ventileinheit ist geeignet, um mit einem unter Druck stehenden Fluid verwendet zu werden, das vorzugsweise eine Flüssigkeit und noch mehr vorzugsweise ein Hydrauliköl ist.

Die Ventileinheit gemäß dem Stand der Technik erlaubt eine gute Kontrolle der Bewegung, da ein Steuerstrom verwendet wird. Es wird jedoch keine Angabe gemacht, wie die Kontrolle des Steuerstroms durchzuführen ist, während eine genaue Kontrolle wünschenswert wäre, besonders im Fall eines Bruches des Rohres.

Ein Ventilsystem mit einer Ventileinheit und einer Logikeinheit ist aus dem Dokument GB 2 440 610 A bekannt.

Die oben umrissenen Probleme sind nun entsprechend der vorliegenden Erfindung durch ein Ventilsystem nach Anspruch 1 gelöst worden.

Die Logikeinheit kann zum Beispiel eine CPU, ein CAN-Bus oder eine beliebige Art von Maschine sein, die geeignet ist, um Signale zu verarbeiten und ein Ausgangssignal abzugeben, um den Steuerstrom der Spule zu regeln.

Die Logikeinheit kann extern sein oder gemäß einem besonderen Aspekt der Erfindung in die Ventileinheit integriert sein. Dies gilt auch für die Fühler, die bekannter Art sein können und derart beschaffen sind, dass sie ein Signal erzeugen, zum Beispiel ein elektrisches Signal, das von der Logikeinheit gelesen werden kann, da sie komplett mit im Fühler integrierten Transduktoren sind. Beispielsweise können Druckfühler in der Ventileinheit integriert sein und auch (direkte oder indirekte) Positionsfühler der Ventilorgane. Positionsfühler (zum Beispiel optische oder mechanische) oder Trägheitsmelder (zum Beispiel dynamometrische) können auf bekannte Weise am Zylinder oder am Stellantrieb oder allgemein an den mechanischen Organen der Maschine angebracht sein, die den Zylinder oder Stellantrieb umfasst.

Vorzugsweise ist ein zweiter Ventilsitz vorhanden, der durch einen zweiten beweglichen Kolben verschließbar ist, wobei der zweite Kolben mit dem Kern gekoppelt ist, wobei der zweite Kolben durch eine Feder gegen den zweiten Ventilsitz gedrückt wird, wobei die Bewegung des zweiten Kolbens konstant durch den elektrischen Strom in der Spule regulierbar ist, wobei ein dritter Ventilsitz vorhanden ist, der durch einen dritten beweglichen Kolben verschließbar ist, wobei ein erster Fließweg des Fluids von der Steuerkammer durch eine zweite Öffnung, weiter durch den zweiten Ventilsitz zum ersten Port vorhanden ist, wobei ein zweiter Fließweg des Fluids von der Steuerkammer durch den dritten Ventilsitz zum ersten Port vorhanden ist, wobei der zweite Fließweg den zweiten Ventilsitz umgeht, sodass der dritte Ventilsitz nicht Teil des ersten Fließwegs ist, wobei der Druck zwischen der zweiten Öffnung und dem zweiten Ventilsitz den dritten Kolben gegen den dritten Ventilsitz drückt, wobei der zweite Ventilsitz am dritten Kolben gelegen ist, wobei der zweite und dritte Ventilsitz auf entgegengesetzten Seiten des dritten Kolbens gelegen sind. Folglich bleibt der erste Ventilsitz offen, wenn ein elektrischer Strom durch die Spule fließt. Der offene Bereich am ersten Ventilsitz hängt hauptsächlich vom oben genannten Strom ab und ist beinahe unabhängig von den Drücken am ersten und zweiten Port. Wenn der Schlauch oder das Rohr im Besonderen auf der Höhe des ersten Ports brechen, sodass es zu einem plötzlichen Druckabfall im ersten Port kommt, bewegt sich der erste Kolben nur in einem unwesentlichen Ausmaß. In keinem Fall verdoppelt der mit dem zweiten Port verbundene Stellantrieb seine Geschwindigkeit. Vorzugsweise ist eine feststehende Verbindung zwischen dem Kern und dem zweiten Kolben vorhanden, sodass die beiden oben genannten Teile sich auf synchrone Weise bewegen.

Vorzugsweise begrenzt der erste Kolben eine dritte Öffnung, die durch eine Bewegung des ersten Kolbens konstant regulierbar ist, wobei die dritte Öffnung zwischen dem ersten Port und dem ersten Ventilsitz im Hinblick auf den Fluidstrom gelegen ist, wobei der offene Bereich der dritten Öffnung sich vergrößert, wenn der erste Kolben vom ersten Ventilsitz entfernt ist. Der erste Ventilsitz garantiert, dass der Strom zwischen dem ersten und dem zweiten Port fluiddicht geschlossen werden kann. Mit der dritten Öffnung kann die Kennlinie des entsprechenden offenen Bereichs reguliert werden.

Vorzugsweise weist der erste Kolben einen rohrförmigen Endabschnitt auf, wobei die dritte Öffnung durch mindestens eine radiale Bohrung im rohrförmigen Endabschnitt begrenzt ist, wobei die erste Öffnung durch mindestens eine Öse auf einer umlaufenden Fläche des ersten Kolbens begrenzt ist. Vorzugsweise sind mehrere radiale Bohrungen und/oder mehrere Ösen vorhanden. Diese Ausgestaltung ist einfach auszuführen und kostengünstig.

Vorzugsweise sind die mindestens eine radiale Bohrung und die mindestens eine Öse auf entgegengesetzten Seiten des ersten Ventilsitzes gelegen.

Vorzugsweise ist ein vierter Ventilsitz vorhanden, der durch einen beweglichen Verschlusskörper verschließbar ist, wobei der vierte Ventilsitz Teil des ersten Fließwegs des Fluids und auch des zweiten Fließwegs des Fluids ist, wobei der bewegliche Verschlusskörper und der dritte Kolben entgegengesetzte Öffnungsrichtungen im Hinblick auf den Fluidfluss aufweisen. Der Verschlusskörper ist vorzugsweise eine Kugel. Die Ausgestaltung entsprechend dem Dokument DE 10 2014 204 070 A1 ist nur für eine Fließrichtung geeignet, im Spezifischen vom ersten zum zweiten Port. Die Ventileinheit wird typischerweise mit zwei Fließrichtungen verwendet. Mit einem Strom vom zweiten Port zum ersten Port ist der oben genannte Zylinder oder Stellantrieb typischerweise unter einer äußerlichen Kraft, wie der Schwerkraft, abgesenkt. In diesem Fall steuert das Vorsteuerventil die Geschwindigkeit der Bewegung. Wenn der Strom vom ersten Port zum zweiten Port fließt, ist das Vorsteuerventil durch den geschlossenen vierten Ventilsitz deaktiviert. Folglich bringt sich der erste Kolben in seine vollständig offene Position. Die Durchflussmenge vom ersten zum zweiten Port wird typischerweise von einem weiteren Ventil gesteuert, das mit der erfindungsgemäßen Ventileinheit durch einen Schlauch oder ein Rohr verbunden ist, dessen Bruch durch die Ventileinheit abgesichert ist.

Vorzugsweise ist der vierte Ventilsitz im Hinblick auf den Fluidstrom zwischen dem dritten Ventilsitz und dem ersten Port gelegen. An diesem Punkt ist es einfach, den vierten Ventilsitz in den ersten und zweiten Fließweg des Fluids zu setzen.

Vorzugsweise sind ein dritter Port und ein Druckbegrenzungsventil vorhanden, das eine Fluidverbindung von der Steuerkammer zum dritten Port öffnet, wenn der Druck am zweiten Port einen vorbestimmten Wert überschreitet, wobei die Steuerkammer auf fluidleitende Weise mit dem zweiten Port durch ein Rückschlagventil verbunden ist, das nur einen Strom von der Steuerkammer zum zweiten Port erlaubt. Dieses Merkmal ist von der Bucher-Ventileinheit bekannt, die vorhin erklärt wurde. Der zweite Port ist durch das Öffnen des ersten Ventilsitzes unter Verwendung des Druckbegrenzungsventils vor übermäßigem Druck abgesichert.

Vorzugsweise weist die Kennlinie des offenen Bereichs der ersten Öffnung im Hinblick auf die Position des ersten Kolbens einen ersten Abschnitt auf, der am geschlossenen ersten Ventilsitz beginnt, wobei sie linear von null mit einer ersten Neigung steigt, wobei sie durch einen zweiten Abschnitt fortsetzt, der linear mit einer zweiten Neigung steigt, wobei die zweite Neigung mindestens das Doppelte, vorzugsweise das Vierfache im Vergleich zur ersten Neigung beträgt. Dank dieser Ausgestaltung ist es möglich, eine sehr präzise Steuerung der Bewegung bei verringerten Geschwindigkeiten zu erhalten.

Vorzugsweise weist das Gehäuse einen vierten Port auf, der fluidleitend mit dem zweiten Port durch eine vierte Öffnung verbunden ist, wobei eine Fluidverbindung zwischen dem vierten Port und dem dritten Port durch einen Gewindestopfen verschließbar ist. Im Fall des Bruches des Rohres oder des Schlauchs kann der Zylinder durch ein äußeres Ventil am vierten Port und/oder durch Abschrauben des Gewindestopfens abgesenkt werden.

Vorzugsweise weist das Gehäuse eine erste, eine zweite und eine dritte Außenfläche auf, die flach und zu zweien zueinander rechtwinkelig sind, wobei der erste Port auf der ersten Außenfläche gelegen ist, wobei der zweite Port auf der zweiten Außenfläche gelegen ist, wobei der erste Kolben senkrecht zur ersten Außenfläche beweglich ist, wobei der zweite und der dritte Kolben senkrecht zur dritten Außenfläche beweglich sind. Das entsprechende Gehäuse erweist sich als sehr kompakt und ist einfach auszuführen. Der dritte und/oder der vierte Port sind vorzugsweise auf der dritten Außenfläche gelegen.

Die Erfindung wird nachfolgend genauer unter Bezugnahme auf die beiliegenden Zeichnungen erklärt, wobei:
Figur 1 eine perspektivische Ansicht einer Ventileinheit darstellt, die Teil eines Systems gemäß der vorliegenden Erfindung ist;
Figur 2 eine Querschnittsansicht der Ventileinheit gemäß Figur 1 darstellt, wobei die Schnittebene die Mittellinie des ersten Kolbens durchquert;
Figur 3 eine weitere Querschnittsansicht der Ventileinheit gemäß Figur 1 darstellt,
wobei die Schnittebene mit U-U in Figur 2 gekennzeichnet ist;
Figur 4 eine Querschnittsansicht des Vorsteuerventils ohne Spule darstellt;
Figur 5 ein Diagramm des offenen Bereichs an der ersten Öffnung darstellt;
Figur 6 ein Diagramm des offenen Bereichs an der dritten Öffnung und am ersten Ventilsitz darstellt;
Figur 7 ein Schema der Ventileinheit gemäß Figur 1 darstellt;
Figur 8, 9, 10 und 11 ein Schema eines Systems gemäß der vorliegenden Erfindung darstellen, wobei jeweils eine Druckkontrolle, eine Trägheitskontrolle, eine Positionskontrolle des Zylinders oder Stellantriebs und eine Druckkontrolle kombiniert mit einer Positionskontrolle des ersten Kolbens der Ventileinheit durchgeführt wird.

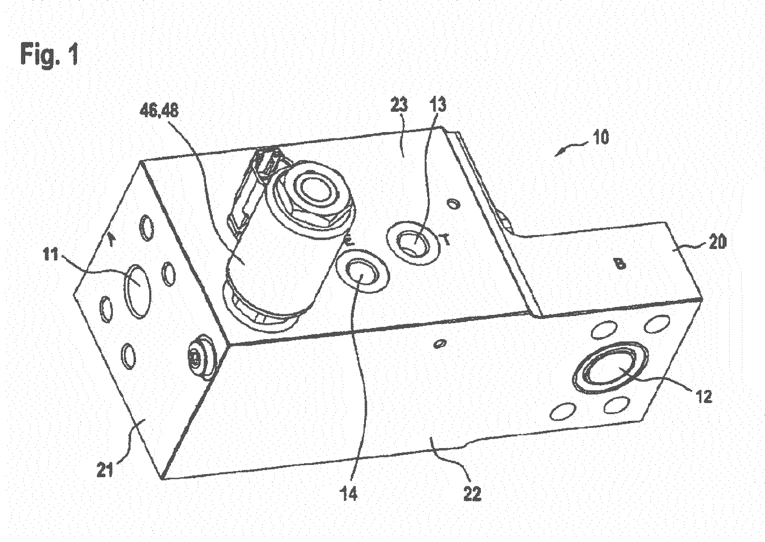

Figur 1 stellt eine perspektivische Ansicht einer Ventileinheit 10 dar, die analog zu der bereits in IT102017000096057 beschriebenen Ventileinheit ist. Die Ventileinheit 10 weist ein Gehäuse 20 auf, das mit einer ersten, einer zweiten und einer dritten Außenfläche 21; 22; 23 versehen ist, die flach und zu zweien zueinander rechtwinkelig sind. Wenn an der dritten Außenfläche 23 betrachtet, weist das Gehäuse ein L-förmiges Profil auf. Das Gehäuse 20 ist aus Aluminium oder Gusseisen erzeugt. An der ersten Außenfläche 21 ist ein erster Port 11 vorhanden, an den ein Schlauch oder Rohr anschließbar ist. An der zweiten Außenfläche 22 ist ein zweiter Port 12 vorhanden, an den ein hydraulischer Stellantrieb, insbesondere ein Hydraulikzylinder, anschließbar ist. Es ist zu bevorzugen, dass der zweite Port 12 direkt an den hydraulischen Stellantrieb angeschlossen ist, und es ist optimal, wenn die zweite Außenfläche 22 gegen den hydraulischen Stellantrieb aufliegt. Auf der dritten Außenfläche 23 sind ein dritter und ein vierter Port 13; 14 vorhanden. Der dritte und der vierte Port 13; 14 sind jeweils Bohrungen, die das gesamte Gehäuse 20 rechtwinkelig zur dritten Außenfläche 23 durchqueren, wobei sie mit einem Gewindestopfen auf der entgegengesetzten Seite (in Figur 1 nicht sichtbar) des Gehäuses 20 verschlossen sind.

Ein Vorsteuerventil 48 ist vorhanden, das als Patronenventil ausgeführt ist. Es ist in eine entsprechende Bohrung in der dritten Außenfläche 23 geschraubt, sodass nur der Teil mit der Spule 46 außerhalb des Gehäuses 20 gelegen ist.

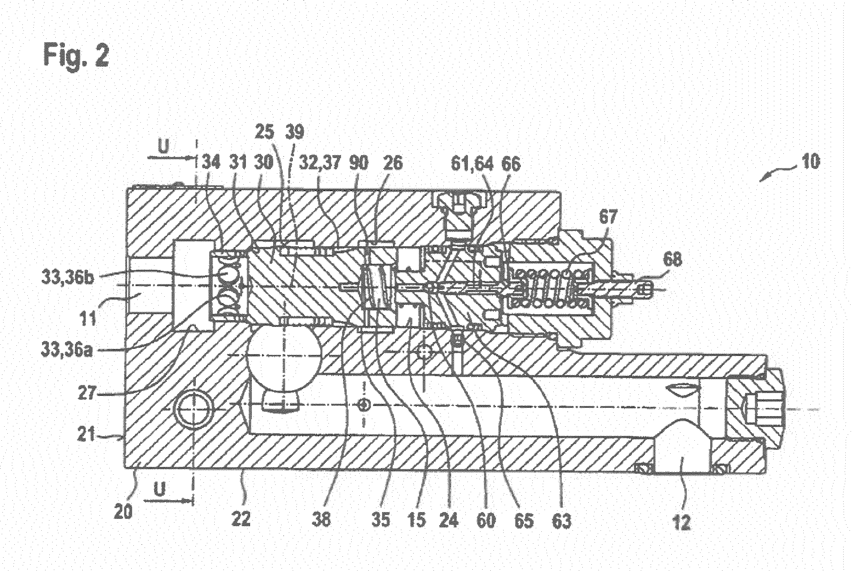

Figur 2 stellt eine Querschnittsansicht der Ventileinheit 10 gemäß Figur 1 dar, wobei die Schnittebene die Mittellinie 39 des ersten Kolbens 30 durchquert, wobei er parallel zur dritten Außenfläche ist (Nr. 23 in Figur 1).

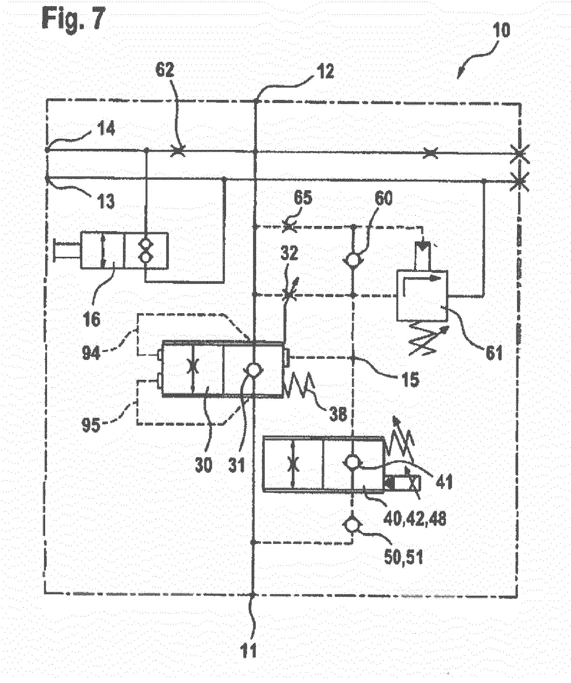

Der erste Kolben 30 wird in einer ersten Bohrung 24 des Gehäuses 10 aufgenommen, in der er linear beweglich ist. Die erste Bohrung 24 definiert einen ersten Ventilsitz 31, der vorzugsweise als ringförmiger Rand ausgeführt ist, der die Mittellinie 39 des ersten Kolbens 30 umgibt. Der Durchmesser des ersten Ventilsitzes 31 ist in einem gewissen Ausmaß kleiner als der Durchmesser der ersten Bohrung 24, sodass der Druck am zweiten Port 12 den ersten Kolben 30 vom ersten Ventilsitz 31 wegdrückt. Die entsprechende Fluidverbindung ist in Figur 7 mit der Referenznummer 94 gekennzeichnet. Wenn sich im Besonderen das erste Druckbegrenzungsventil 61 öffnet, entfernt sich der erste Kolben 30 vom Ventilsitz 31. Unter anderen Betriebsbedingungen übt der Druck in der Steuerkammer 15 eine größere Kraft auf den ersten Kolben 30 im Vergleich zum Druck am zweiten Port 12 aus. Der hydraulisch wirksame Bereich des ersten Kolbens 30 im Hinblick auf den Druck am ersten Port 11 ist ungefähr das Vierfache des hydraulisch wirksamen Bereichs des ersten Kolbens 30 im Hinblick auf den Druck am zweiten Port 12. Der erste Ventilsitz 31 ist durch den ersten Kolben 30 verschließbar, vorzugsweise durch einen kegelförmigen Querschnitt des ersten Kolbens 30. Der erste Port 11 ist durch ein offenes Ende der ersten Bohrung 24 definiert, sodass der Druck am ersten Port 11 den ersten Kolben 30 vom ersten Ventilsitz 31 wegdrückt. Die entsprechende Fluidverbindung ist in Figur 7 mit der Referenznummer 95 gekennzeichnet.

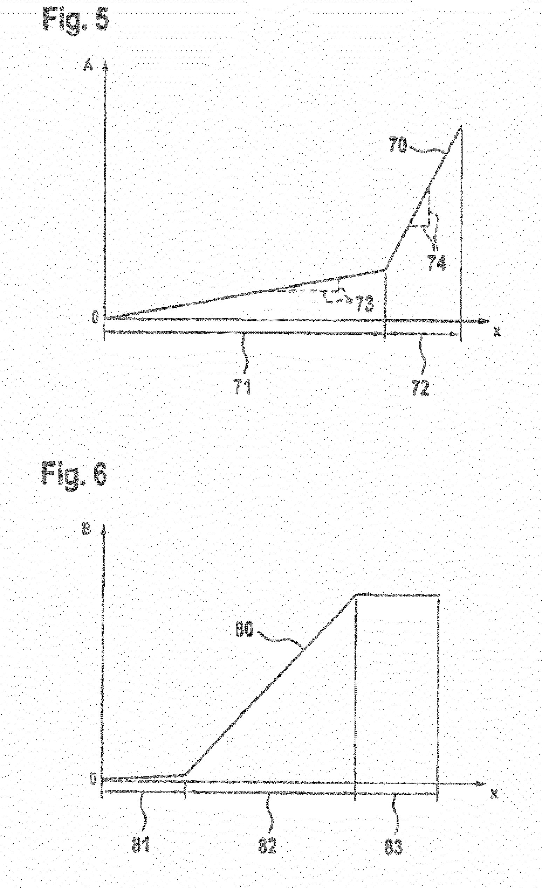

Der erste Kolben 30 weist einen rohrförmigen Endabschnitt 34 auf, der zum ersten Port 11 ausgerichtet ist. Der rohrförmige Endabschnitt 34 weist eine erste und eine zweite radiale Bohrung 36a; 36b auf, die eine dritte Öffnung 33 bilden, wobei die dritte Öffnung 33 des Weiteren durch einen Steuerrand auf dem Gehäuse 20 begrenzt ist. Die dritte Öffnung 33 ist im Fließweg des Fluids vom ersten zum zweiten Port 11; 12 zwischen dem ersten Port 11 und dem ersten Ventilsitz 31 gelegen. Der kombinierte Widerstand des Fluidstroms der dritten Öffnung und des ersten Ventilsitzes 31 wird nachfolgend unter Bezugnahme auf Figur 6 erklärt.

Die erste Bohrung 24 weist eine erste ringförmige Rille 25 auf, die fluidleitend mit dem zweiten Port 12 verbunden ist, vorzugsweise durch mindestens eine Bohrung im Gehäuse 20. Die erste ringförmige Rille 25 umgibt den ersten Kolben 30, sodass der erste und der zweite Port 11; 12 fluidleitend durch den ersten Ventilsitz verbindbar sind. Der erste Kolben 30 begrenzt eine Steuerkammer 15, wobei der erste Ventilsitz 31 und die Steuerkammer 15 auf entgegengesetzten Seiten des ersten Kolbens 30 gelegen sind. Der Druck in der Steuerkammer 15 drückt den Kolben gegen den ersten Ventilsitz 31. Das Gehäuse 20 weist eine zweite ringförmige Rille 26 auf, die den ersten Kolben 30 umgibt. Die zweite ringförmige Rille 26 definiert einen Steuerrand einer ersten regulierbaren Öffnung 32. Die erste Öffnung 32 ist des Weiteren durch die Ösen 37 auf der umlaufenden Fläche 35 des ersten Kolbens 30 begrenzt, die parallel zur Mittellinie 30 des ersten Kolbens 30 sind. Der offene Bereich der ersten Öffnung 32 vergrößert sich, wenn der erste Kolben 30 vom ersten Ventilsitz 31 entfernt ist, wobei weitere Details nachfolgend unter Bezugnahme auf Figur 5 erklärt werden. Die erste Öffnung 32 ist zwischen der ersten und der zweiten ringförmigen Rille 25; 26 gelegen. Die zweite ringförmige Rille 26 ist mit der Steuerkammer 15 durch zweite Bohrungen 90 im ersten Kolben 30 verbunden, sodass der zweite Port 12 mit der Steuerkammer 15 durch die erste Öffnung 32 verbunden ist.

Die Steuerkammer 15 ist des Weiteren durch das Gehäuse 20 und durch einen getrennten Einsatzteil 63 begrenzt, der im Inneren der ersten Bohrung 24 befestigt ist. Zwischen dem Einsatzteil 63 und dem ersten Kolben 30 ist eine Feder 38 vorhanden, vorzugsweise eine Spiralfeder, die den ersten Kolben 30 gegen den ersten Ventilsitz 31 drückt. Der Einsatzteil 63 nimmt ein Rückschlagventil 60 und ein Druckbegrenzungsventil 61 auf. Das Rückschlagventil 60 ist durch eine getrennte Kugel und einen Ventilsitz auf dem Einsatzteil 63 geschaffen. Es erlaubt nur einen Fluidstrom von der Steuerkammer 15 zum zweiten Port 12. In diesem Fließweg des Fluids ist eine fünfte Öffnung 65 vorhanden, die einen definierten fixen Fließwiderstand aufweist, wobei sie vorzugsweise durch einen getrennten Teil geschaffen ist, der im Einsatzteil 63 angeschraubt ist.

Der Druck zwischen dem Rückschlagventil 60 und der fünften Öffnung 65 wirkt auf ein Gleitelement 64 des Druckbegrenzungsventils 61 in einer Öffnungsrichtung eines entsprechenden Sitzventils 66, das durch das gleitende Element 64 und den Einsatzteil 63 geschaffen ist. Das gleitende Element 64 wird durch eine Feder 67 in die entgegengesetzte Richtung gedrückt, deren Vorspannung durch eine Schraube 68 regulierbar ist. Folglich ist der Öffnungsdruck des Druckbegrenzungsventils 61 durch die Schraube 68 regulierbar. Die Steuerkammer 15 ist fluidleitend mit dem dritten Port (Nr. 13 in Figur 1) durch das Sitzventil 66 verbindbar. Vorzugsweise ist ein entsprechender Kanal im Einsatzteil 63 vorhanden, der mit einer gestrichelten Linie in Figur 2 gekennzeichnet ist.

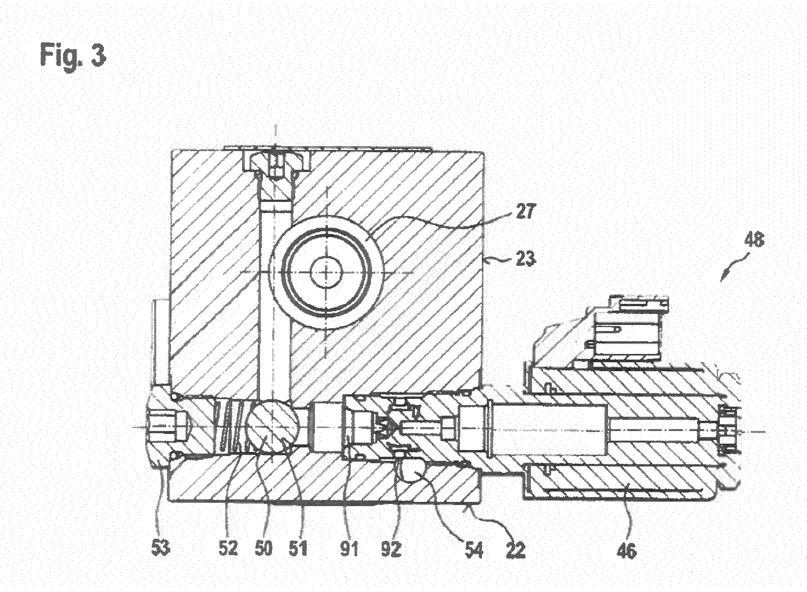

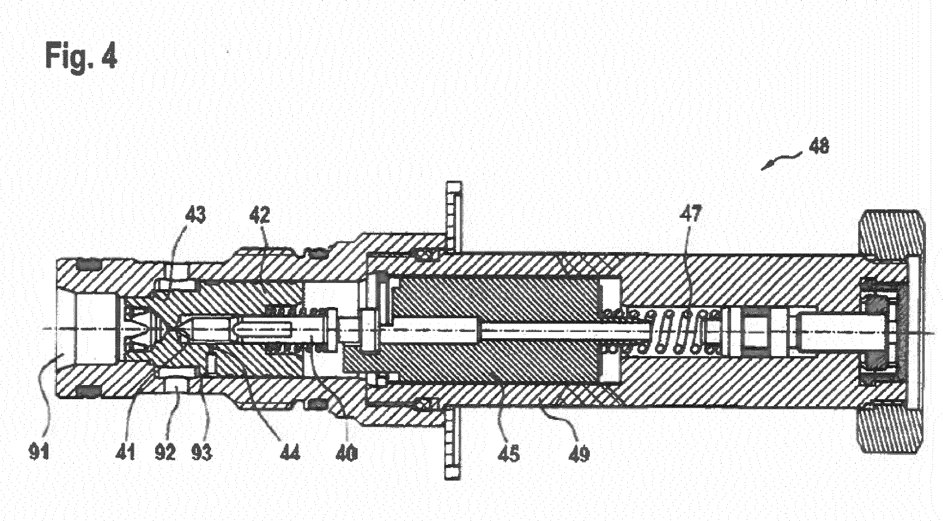

Figur 3 stellt eine weitere Querschnittsansicht der Ventileinheit 10 gemäß Figur 1 dar, wobei die Schnittebene mit U-U in Figur 2 gekennzeichnet ist. Das Vorsteuerventil 48 ist auf vereinfachte Weise dargestellt, wobei Figur 4 weitere Details des Vorsteuerventils 48 darstellt.

Es ist ein Fließweg des Fluids von der Steuerkammer (Nr. 15 in Figur 2) durch das Vorsteuerventil 48, weiter durch einen vierten Ventilsitz 51 zu einer dritten ringförmigen Rille 27 (siehe ebenfalls Figur 2) der ersten Bohrung (Nr. 24 in Figur 2) vorhanden. Der erste Port (Nr. 11 in Figur 2) ist direkt mit der dritten ringförmigen Rille 27 verbunden.

Der vierte Ventilsitz 52 ist durch einen Verschlusskörper 50 verschließbar, der als Kugel ausgeführt ist. Der Verschlusskörper 50 ist durch eine Öffnung im Gehäuse 20 angebracht, das durch einen Gewindestopfen 53 verschlossen ist. Zwischen dem Gewindestopfen 53 und dem Verschlusskörper 50 ist eine Feder 52 vorhanden, vorzugsweise eine Spiralfeder, die den Verschlusskörper 50 gegen den vierten Ventilsitz 51 drückt. Der Verschlusskörper 50 erlaubt nur einen Fluidstrom vom Vorsteuerventil 48 zum ersten Port (Nr. 11 in Figur 2), aber nicht in der Gegenrichtung.

Das Vorsteuerventil 48 ist als Patronenventil ausgeführt, wobei es eine Spule 46 aufweist, die eine magnetische Kraft auf einen Kern (Nr. 45 in Figur 4) ausüben kann.

Figur 4 stellt eine Querschnittsansicht des Vorsteuerventils 48 ohne Spule (Nr. 46 in Figur 3) dar. Die Schnittebene ist dieselbe wie in Figur 3, in der sie das Zentrum des Vorsteuerventils 48 durchquert. Der Kern 45 ist in einem Rohr 49 angebracht, in dem er linear beweglich ist. Das Rohr 49 ist von einer elektrischen Spule (Nr. 46 in Figur 3) umgeben, sodass die Spule eine magnetische Kraft auf den Kern ausüben kann, die vom zweiten Ventilsitz 41 weggerichtet ist. Der zweite Ventilsitz 41 ist mit einem zweiten Kolben 40 verschließbar, der mit dem Kern 45 gekoppelt ist, sodass der zweite Kolben 40 der Bewegung des Kerns 45 in einem Verhältnis 1:1 folgt. Es ist eine Feder 47 vorhanden, die den zweiten Kolben 40 gegen den zweiten Ventilsitz 41 drückt.

Der zweite Ventilsitz 41 ist auf einem dritten beweglichen Kolben 42 gelegen. Das Vorsteuerventil 48 weist einen dritten Ventilsitz 43 auf, der durch den dritten Kolben 42 verschließbar ist. Der dritte Ventilsitz 43 und der zweite Ventilsitz 41 sind auf entgegengesetzten Seiten des dritten Kolbens 42 gelegen. Das Vorsteuerventil 48 weist einen fünften Port 91 auf, der auf seiner Endseite gelegen ist, sowie einen sechsten Port 92, der auf seiner umlaufenden Fläche gelegen ist. Der fünfte Port 91 ist fluidleitend mit dem ersten Port durch den vierten Ventilsitz (Nr. 51 in Figur 3) verbunden. Der sechste Port 92 ist mit der Steuerkammer (Nr. 15 in Figur 2) verbunden. Im Vorsteuerventil 48 sind ein erster und ein zweiter Fließweg des Fluids vorhanden, die parallel sind. Der erste Fließweg des Fluids geht vom sechsten Port 92 durch eine zweite Öffnung 44, weiter durch den zweiten Ventilsitz 41 zum fünften Port 91. Die zweite Öffnung 44 weist einen fixen Fließwiderstand auf, wobei sie durch eine Bohrung im dritten Kolben 42 erzeugt ist. Der erste Fließweg des Fluids verläuft auf einem reduzierten Abschnitt durch einen kleinen Zwischenraum 93 zwischen dem dritten Kolben 42 und dem umliegenden Vorsteuerventil 48. Der zweite Fließweg des Fluids geht vom sechsten Port 92 durch den dritten Ventilsitz 43 zum fünften Port 91. Der zweite Fließweg des Fluids umgeht den zweiten Ventilsitz 41, sodass der dritte Ventilsitz 43 nicht Teil des ersten Fließwegs ist. Der Druck zwischen dem zweiten Ventilsitz 41 und der zweiten Öffnung 44 drückt den dritten Kolben 42 gegen den dritten Ventilsitz 43. Der Druck am sechsten Port 92 drückt den dritten Kolben 42 vom dritten Ventilsitz weg. Folglich folgt der dritte Kolben 42 der Bewegung des zweiten Kolbens 40. Der hydraulisch wirksame Durchmesser des zweiten Ventilsitzes 41 ist kleiner als der hydraulisch wirksame Durchmesser des dritten Ventilsitzes 43.

Figur 5 stellt ein Diagramm des offenen Bereichs an der ersten Öffnung (Nr. 32 in Figur 2) dar. Die vertikale Achse entspricht dem oben genannten offenen Bereich A. Die horizontale Achse entspricht der Position x des ersten Kolbens. Mit x = 0 schließt der erste Kolben den ersten Ventilsitz (Nr. 31 in Figur 2). In einem ersten Abschnitt 71 der entsprechenden Kennlinie 70 steigert sich der offene Bereich A von null mit einer ersten Neigung 73. Der erste Abschnitt 71 setzt sich durch einen zweiten Abschnitt 72 fort, wobei der offene Bereich A der Kennlinie 70 sich weiter mit einer zweiten Neigung 74 steigert. Die zweite Neigung 74 ist mindestens das Doppelte, vorzugsweise das Vierfache, im Vergleich zur ersten Neigung 73. Im ersten und im zweiten Abschnitt 71; 72 weist die Kennlinie 70 ein lineares Verhalten auf, in dem Maße wie dies durch eine korrekte Ausgestaltung der Ösen (Nr. 37 in Figur 2) im ersten Kolben erreichbar ist.

Figur 6 stellt ein Diagramm des offenen Bereichs B an der dritten Öffnung (Nr. 33 in Figur 2) und am ersten Ventilsitz (Nr. 31 in Figur 2) dar.

Die vertikale Achse entspricht dem oben genannten offenen Bereich B, der auf der kombinierten Wirkung der dritten Öffnung und der Öffnung am ersten Ventilsitz basiert. Die horizontale Achse entspricht der Position x des ersten Kolbens. Mit x = 0 schließt der erste Kolben den ersten Ventilsitz. In einem ersten Abschnitt 81 der entsprechenden Kennlinie 80 wird der offene Bereich B vorwiegend von den relativ kleinen ersten radialen Bohrungen (Nr. 36a in Figur 2) bestimmt. Daher steigt die Kennlinie 80 relativ flach von null an. Der erste Abschnitt 81 setzt sich durch den zweiten Abschnitt 82 fort, wobei der offene Abschnitt A vorwiegend von den relativ großen zweiten radialen Bohrungen (Nr. 36b in Figur 2) bestimmt wird, wobei die ersten radialen Bohrungen vollkommen offen sind. Daher steigt die Kennlinie 80 mit einer ausgeprägten Neigung weiter. Im dritten Abschnitt 83 sind die ersten und zweiten radialen Bohrungen vollkommen offen, wobei nur die Öffnung am ersten Ventilsitz auf die Neigung der Kennlinie Einfluss nimmt. Da diese Öffnung signifikant größer als der offene Bereich bei der ersten und zweiten radialen Bohrung ist, ist die Kennlinie 80 im dritten Abschnitt 83 nahezu flach. Im ersten, im zweiten und im dritten Abschnitt 81; 82; 83 weist die Kennlinie 82 ein nahezu lineares Verhalten auf, in dem Maße wie dies technisch möglich ist.

Figur 7 stellt ein Schema der Ventileinheit gemäß Figur 1 dar. Die erste Öffnung 32 ist als getrenntes Symbol dargestellt, wobei eine Verbindungslinie zum ersten Kolben 30 vorhanden ist, die angibt, dass die erste Öffnung 32 vom ersten Kolben 30 definiert wird. Alle Fluidverbindungen sind auf diese Weise dargestellt, wie unter Bezugnahme auf Figur 1 bis 6 beschrieben.

Ein vierter Port 14 ist mit dem zweiten Port 12 durch eine vierte Öffnung 62 verbunden. Es ist möglich, ein (nicht dargestelltes) Außenventil am vierten Port 14 anzubringen. Dieses Ventil ist normalerweise geschlossen. Es ist nur geöffnet, wenn der Schlauch oder das Rohr brechen, mit dem Ziel, den hydraulischen Stellantrieb, der mit der Ventileinheit 10 verbunden ist, zu bewegen. Es ist ebenfalls möglich, den vierten Port 14 permanent zu verschließen. In diesem Fall kann der Gewindestopfen 16 abgeschraubt werden, um eine Fluidverbindung zwischen dem vierten Port 14 und dem dritten Port 13 zu öffnen. Der dritte Port 13 ist typischerweise mit einem Tank verbunden.

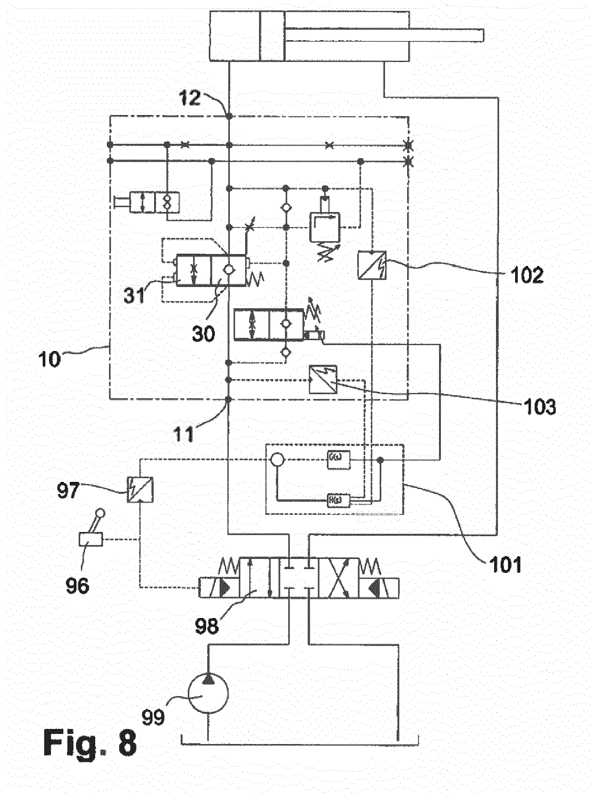

Unter Bezugnahme auf Figur 8-11 umfasst das System gemäß der vorliegenden Erfindung eine Einheit 10, wie oben beschrieben, und eine Logikeinheit, die in den verschiedenen Figuren jeweils mit 101, 201, 301, 401 angegeben ist.

Eine Vorrichtung zur Eingabe von Befehlen 96 bekannter Art ist durch einen dafür vorgesehen Transduktor 97 mit der Logikeinheit verbunden. Ein doppeltwirkendes Ventil 98, ebenfalls bekannter Art, kann, wie es im Allgemeinen bei einer Ventileinheit bekannter Art oder wie oben beschrieben geschieht, die Fluidquelle 99 mit der Ventileinheit 10 verbinden. Es kann von der Vorrichtung 96 gesteuert werden und eine Kompensationsfunktion der Ströme je nach den bekannten Verhaltensmerkmalen ausüben.

Gemäß der Erfindung funktioniert das System dank der Logikeinheit in einem reinen Überwachungsmodus, bei dem die Steuerung des Stellantriebs oder Zylinders während der kontrollierten Bewegung, in der das Öl vom Port 12 zum Port 11 fließt, durch eine Hauptkontrolle außerhalb des Systems erfolgt, beispielsweise die Pumpe der Fluidquelle 99 und das doppeltwirkende Ventil 98, das direkt von der Vorrichtung zur Eingabe von Befehlen 96 gesteuert werden kann. In diesem Modus hält die Logikeinheit die Ventileinheit 10 offen, vorzugsweise ganz offen, indem sie zum Beispiel die Spule mit dem Maximalstrom speist, durch gesteuerte Schließung eingreift, den Strom nur auf das Minimum reduziert, wenn durch die Fühler eine Störung erfasst wird, die zum Beispiel im Zusammenhang mit dem Bruch der Zufuhrleitung oder auch einem Bruch nach der Ventileinheit steht. Auf diese Weise greift die Ventileinheit auf effizientere und präzisere Weise im Vergleich zum Stand der Technik ein.

Gemäß der Erfindung funktioniert das System in einem aktiven Kontrollmodus, bei dem die Logikeinheit durch Verarbeitung der in die Eingabevorrichtung eingegebenen Daten das Öffnen der Ventileinheit 10 regelt, um die Kontrolle des Stellantriebs oder Zylinders durchzuführen, wobei die Daten der Fühler stets überwacht werden, um auf die oben umrissene Weise im Falle einer festgestellten Störung einzugreifen. Das System funktioniert je nach Anforderung in den beiden oben genannten Modi alternativ.

Die nachfolgend umrissenen Funktionsschemata sind geeignet, um bei jedem der Modi eingesetzt zu werden.

Unter Bezugnahme auf Figur 8 sind zwei Druckfühler 102 und 103 vorhanden, die den Druck am zweiten Port 12 beziehungsweise am ersten 11 messen. Sie können vorteilhafterweise in die Ventileinheit 10 integriert sein. Die Logikeinheit 101 verarbeitet die Daten der Sensoren, indem sie die Druckdifferenz berechnet. Eine zu hohe Differenz zwischen dem Port 12 und 11 kann als Bruch des Zuleitungsrohres interpretiert werden und das Schließen der Ventileinheit durch die Logikeinheit hervorrufen, die den Strom zur Spule 46 vom maximalen oder mittleren Öffnungswert, je nachdem welcher der oben dargestellten Modi operativ ist, auf den minimalen Wert reduziert, welcher der vollständigen Schließung der Ventileinheit zugeordnet ist.

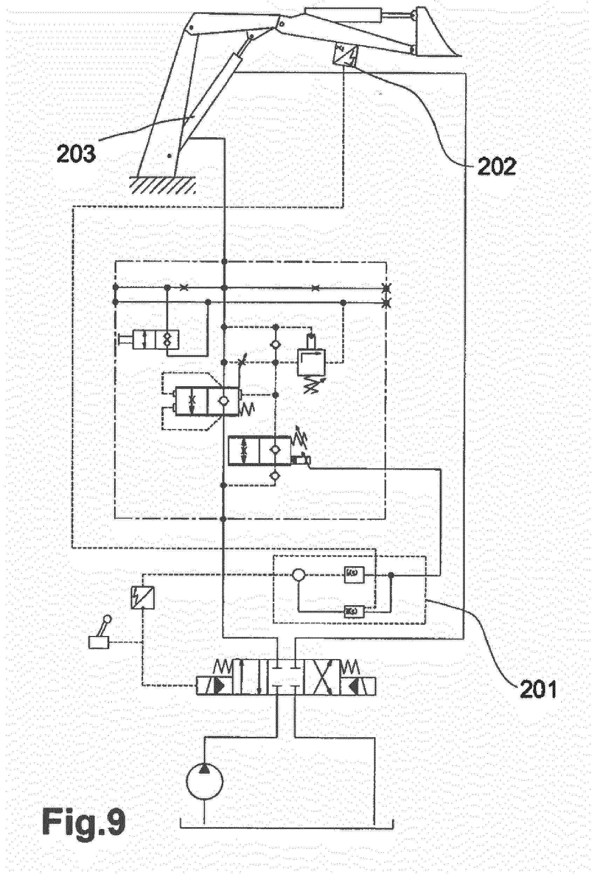

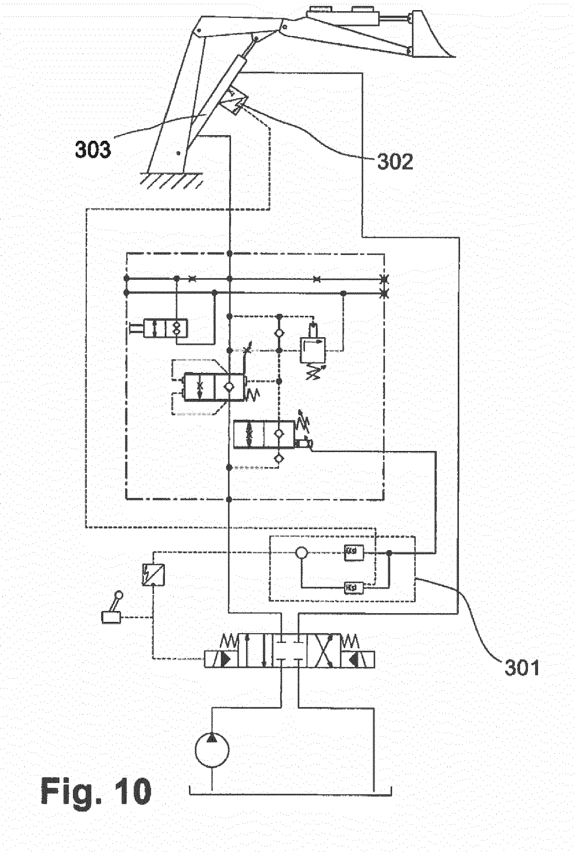

Bei der Ausführungsform von Figur 9 ist ein Trägheitsmelder 202 entsprechend auf der Maschine 203 positioniert, die vom Stellantrieb oder Zylinder bewegt wird. In diesem Fall kann die Logikeinheit 201 eine übermäßige Beschleunigung als Störung interpretieren, die die Schließung wie oben erfordert. Bei der Ausführungsform von Figur 10 misst ein Positionsfühler 303 den Hub des Stellantriebs 303 der Maschine. In diesem Fall kann die Logikeinheit 301 die Angabe zur Regulierung verwenden, falls im aktiven Kontrollmodus gearbeitet wird, und eine Beschleunigung über eine gewisse Schwelle hinaus wie im vorhergehenden Fall interpretieren.

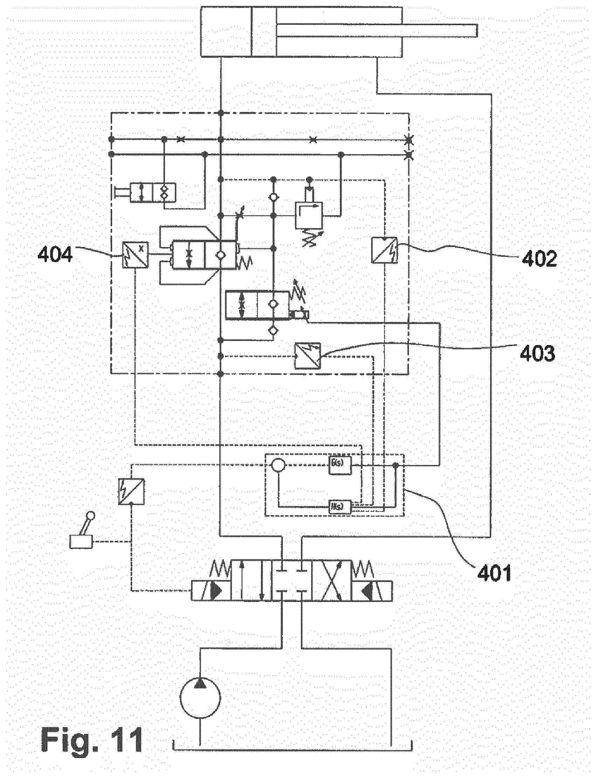

In Figur 11 ist eine Ausführungsform dargestellt, bei der ein Positionsfühler 404 die Position eines Organs in der Ventileinheit 10 liefert, vorzugsweise jene des ersten Kolbens 30, das mit dem Öffnen der ersten Öffnung korreliert, die die Durchflussmenge des Fluids vom zweiten Port 12 zum ersten 11 bestimmt. Zu diesem Zweck kann er eine direkte oder indirekte Messung durchführen, indem zum Beispiel die Druckdifferenz am ersten Port 11 und in der Kontrollkammer 15 gemessen wird. Diese Art von Fühler kann vorzugsweise mit anderen Fühlern von bereits gesehener Art verwendet werden, zum Beispiel dem Fühlerpaar 402 und 403, das, wie im Fall von Figur 8, die Druckdifferenz zwischen dem zweiten und ersten Port misst. Der Zusatz des Positionsfühlers 404 ist selbstverständlich vorteilhaft, falls die Logikeinheit dazu bestimmt ist, im aktiven Kontrollmodus zu arbeiten.

Es können auch verschiedene Fühlerkombinationen ausgeführt werden, auch indem zwei oder mehrere der oben vorgestellten Schemata kombiniert werden, jedoch nur innerhalb des Schutzbereiches der Erfindung, der durch die folgende Ansprüche definiert ist.

### REFERENZNUMMERN

- A: offener Bereich an der ersten Öffnung
- B: offener Bereich an der dritten Öffnung und am ersten Ventilsitz
- X: Position des ersten Kolbens
- 10: Ventileinheit
- 11: erster Port
- 12: zweiter Port
- 13: dritter Port
- 14: vierter Port
- 15: Steuerkammer
- 16: Gewindestopfen
- 20: Gehäuse
- 21: erste Außenfläche
- 22: zweite Außenfläche
- 23: dritte Außenfläche
- 24: erste Bohrung
- 25: erste ringförmige Rille
- 26: zweite ringförmige Rille
- 27: dritte ringförmige Rille
- 30: erster Kolben
- 31: erster Ventilsitz
- 32: erste Öffnung
- 33: dritte Öffnung
- 34: rohrförmiger Endabschnitt
- 35: umlaufende Fläche
- 36a: erste radiale Bohrung
- 36: zweite radiale Bohrung
- 37: Öse
- 38: Feder
- 39: Mittellinie des ersten Kolbens
- 40: zweiter Kolben
- 41: zweiter Ventilsitz
- 42: dritter Kolben
- 43: dritter Ventilsitz
- 44: zweite Öffnung
- 45: Kern
- 46: Spule
- 47: Feder
- 48: Vorsteuerventil
- 49: Rohr
- 50: Verschlusskörper
- 51: vierter Ventilsitz
- 52: Feder
- 53: Gewindestopfen
- 54: Bohrung
- 60: Rückschlagventil
- 61: Druckbegrenzungsventil
- 62: vierte Öffnung
- 63: Einsatzteil
- 64: Gleitelement
- 65: fünfte Öffnung
- 66: Sitzventil
- 67: Feder
- 68: Schraube
- 70: Kennlinie der ersten Öffnung
- 71: erster Abschnitt von 70
- 72: zweiter Abschnitt von 70
- 73: erste Neigung
- 74: zweite Neigung
- 80: Kennlinie der dritten Öffnung und des ersten Ventilsitzes
- 81: erster Abschnitt von 80
- 82: zweiter Abschnitt von 80
- 83: dritter Abschnitt von 80
- 90: zweite Bohrung
- 91: fünfter Port
- 92: sechster Port
- 93: Zwischenraum
- 94: Fluidverbindung
- 95: Fluidverbindung
- 96: Vorrichtung zur Eingabe von Befehlen
- 97: Transduktor
- 98: doppeltwirkendes Ventil
- 99: Fluidzufuhr
- 101, 201, 301, 401: Logikeinheit
- 102, 103, 402, 403: Positionsfühler
- 202: Trägheitsmelder
- 203: Maschine
- 302: Positionsfühler
- 303: Zylinder oder Stellantrieb
- 404: Positionsfühler des Organs in der Ventileinheit

## Patentansprüche

1. Ventilsystem, das eine Ventileinheit (10) umfasst, die mit einem Gehäuse (20) versehen ist, das einen ersten Ventilsitz (31) aufweist, der durch einen ersten beweglichen Kolben (30) verschließbar ist, wobei das Gehäuse einen ersten und einen zweiten Port (11; 12) aufweist, wobei der erste Port (11) auf fluidleitende Weise mit dem zweiten Port (12) durch den ersten Ventilsitz (31) verbunden ist, wobei der Druck am ersten Port (11) den ersten Kolben (30) vom ersten Ventilsitz (31) wegdrückt, wobei der erste Kolben (30) eine erste Öffnung (32) begrenzt, die durch eine Bewegung des ersten Kolbens (30) konstant regulierbar ist, wobei der erste Kolben (30) eine Steuerkammer (15) begrenzt, wobei der Druck in der Steuerkammer (15) den ersten Kolben (30) gegen den ersten Ventilsitz (31) drückt, wobei der zweite Port (12) auf fluidleitende Weise mit der Steuerkammer (15) durch die erste Öffnung (32) verbunden ist, wobei in der Ventileinheit (10) ein Kern (45) vorhanden ist, der zumindest teilweise von einer Spule (46) umgeben ist, wobei ein Fluidstrom von der Steuerkammer (15) zum ersten Port (11) durch einen elektrischen Strom in der Spule (46) regulierbar ist,
wobei das Ventilsystem **dadurch gekennzeichnet ist, dass** es eine Logikeinheit (101, 202, 301, 401) umfasst, die konfiguriert ist, um Signale von mindestens einem Fühler und von einer Vorrichtung zur Eingabe von Befehlen zu empfangen und um den elektrischen Strom in der Spule (46) infolge der Daten des Fühlers und der Vorrichtung zur Eingabe von Befehlen zu regulieren;
wobei die Logikeinheit (101, 201, 301, 401) konfiguriert ist, um während des Durchgangs des Fluids vom zweiten Port (12) zum ersten Port (11) alternativ in einem reinen Überwachungsmodus zu funktionieren, bei dem sie eine fixe Öffnung des Durchgangs zwischen dem zweiten und ersten Port bestimmt, im Besonderen die maximale Öffnung, und in einem aktiven Kontrollmodus, bei dem sie die Öffnung des Durchgangs als Reaktion auf die Signale der Vorrichtung zur Eingabe von Befehlen (96) regelt.

2. System nach Anspruch 1, das Druckfühler (102, 103, 402, 403) umfasst, die in die Ventileinheit (10) integriert und konfiguriert sind, um den Druck am ersten (11) und zweiten (12) Port zu messen.

3. System nach Anspruch 2, das einen Positionsfühler (404) eines Organs in der Ventileinheit (10) umfasst, im Besonderen des ersten Kolbens (30).

4. System nach einem beliebigen vorhergehenden Anspruch, bei dem die Logikeinheit (101, 201, 301, 401) konfiguriert ist, um Signale von einem Trägheitsmelder (202) oder Positionsfühler (302) zu empfangen, der einem Stellantrieb oder Zylinder (303) oder einer Maschine (203) zugeordnet werden kann, die den Stellantrieb oder Zylinder umfasst.

5. System nach einem beliebigen vorhergehenden Anspruch, bei dem ein zweiter Ventilsitz (41) vorhanden ist, der durch einen zweiten beweglichen Kolben (40) verschließbar ist, wobei der zweite Kolben (40) mit dem Kern (45) gekoppelt ist, wobei der zweite Kolben (40) durch eine Feder (47) gegen den zweiten Ventilsitz gedrückt wird, wobei die Bewegung des zweiten Kolbens (40) durch den elektrischen Strom in der Spule (46) konstant regulierbar ist, wobei ein dritter Ventilsitz (43) vorhanden ist, der mit einem dritten beweglichen Kolben (42) verschließbar ist, wobei ein erster Fließweg des Fluids von der Steuerkammer (15) durch eine zweite Öffnung (44), weiter durch den zweiten Ventilsitz (41) zum ersten Port (11) vorhanden ist, wobei ein zweiter Fließweg des Fluids von der Steuerkammer (15) durch den dritten Ventilsitz (43) zum ersten Port (11) vorhanden ist, wobei der zweite Fließweg des Fluids den zweiten Ventilsitz (41) umgeht, sodass der dritte Ventilsitz (43) nicht Teil des ersten Fließweges ist, wobei der Druck zwischen der zweiten Öffnung (44) und dem zweiten Ventilsitz (41) den dritten Kolben (42) gegen den dritten Ventilsitz (43) drückt, wobei der zweite Ventilsitz (41) am dritten Kolben (42) gelegen ist, wobei der zweite und dritte Ventilsitz (41; 43) auf entgegengesetzten Seiten des dritten Kolbens (42) gelegen sind.

6. System nach Anspruch 5, bei dem der erste Kolben (30) eine dritte Öffnung (33) begrenzt, die durch eine Bewegung des ersten Kolbens (30) konstant regulierbar ist, wobei die dritte Öffnung (33) zwischen dem ersten Port (11) und dem ersten Ventilsitz (31) im Hinblick auf den Fluidstrom gelegen ist, wobei der offene Bereich der dritten Öffnung (33) sich vergrößert, wenn der erste Kolben (30) vom ersten Ventilsitz (31) entfernt ist.

7. System nach Anspruch 6, bei dem der erste Kolben (30) einen rohrförmigen Endabschnitt (34) aufweist, wobei die dritte Öffnung (33) durch mindestens eine radiale Bohrung (36a; 36b) im rohrförmigen Endabschnitt (34) begrenzt ist, wobei die erste Öffnung (32) durch mindestens eine Öse (37) auf einer umlaufenden Fläche (35) des ersten Kolbens (30) begrenzt ist.

8. System nach Anspruch 7, bei dem die mindestens eine radiale Bohrung (36a; 36b) und mindestens eine Öse (37) auf entgegengesetzten Seiten des ersten Ventilsitzes (31) gelegen sind.

9. System nach Anspruch 5, bei dem ein vierter Ventilsitz (51) vorhanden ist, der durch einen beweglichen Verschlusskörper (50) verschließbar ist, wobei der vierte Ventilsitz (51) Teil des ersten Fließwegs des Fluids und auch des zweiten Fließwegs des Fluids ist, wobei der bewegliche Verschlusskörper (50) und der dritte Kolben (42) entgegengesetzte Öffnungsrichtungen im Hinblick auf den Fluidfluss aufweisen.

10. System nach Anspruch 9, bei dem der vierte Ventilsitz (51) im Hinblick auf den Fluidstrom zwischen dem dritten Ventilsitz (43) und dem ersten Port (11) gelegen ist.

11. System nach einem beliebigen der vorhergehenden Ansprüche, bei dem ein Druckbegrenzungsventil (61) vorhanden ist, das eine Fluidverbindung von der Steuerkammer (15) zu einem dritten Port (13) öffnet, wenn der Druck am zweiten Port (12) einen vorbestimmten Wert überschreitet, wobei die Steuerkammer (15) auf fluidleitende Weise mit dem zweiten Port (12) durch ein Rückschlagventil (60) verbunden ist, das nur einen Strom von der Steuerkammer (15) zum zweiten Port (12) erlaubt.

12. System nach einem beliebigen der vorhergehenden Ansprüche, bei dem die Kennlinie (70) des offenen Bereichs der ersten Öffnung (32) im Hinblick auf die Position des ersten Kolbens (30) einen ersten Abschnitt (71) aufweist, der am geschlossenen ersten Ventilsitz (31) beginnt, wobei sie linear von null mit einer ersten Neigung (73) steigt, wobei sie durch einen zweiten Abschnitt (72) fortsetzt, der linear mit einer zweiten Neigung (74) steigt, wobei die zweite Neigung (74) mindestens das Doppelte, vorzugsweise mindestens das Vierfache im Vergleich zur ersten Neigung (73) beträgt.

13. System nach Anspruch 11, bei dem das Gehäuse einen vierten Port (14) aufweist, der fluidleitend mit dem zweiten Port (12) durch eine vierte Öffnung (62) verbunden ist, wobei eine Fluidverbindung zwischen dem vierten Port (14) und dem dritten Port (13) durch einen Gewindestopfen (16) verschließbar ist.

14. System nach Anspruch 5 oder einem der Ansprüche 6-13, wenn abhängig von Anspruch 5, bei dem das Gehäuse (20) eine erste, eine zweite und eine dritte Außenfläche (11; 12; 13) aufweist, die flach und zu zweien zueinander rechtwinkelig sind, wobei der erste Port (11) auf der ersten Außenfläche (21) gelegen ist, wobei der zweite Port (12) auf der zweiten Außenfläche (22) gelegen ist, wobei der erste Kolben (30) senkrecht zur ersten Außenfläche (21) beweglich ist, wobei der zweite und der dritte Kolben (40; 42) senkrecht zur dritten Außenfläche (23) beweglich sind.

## Claims

1. Valve system, which comprises a valve unit (10), which is provided with a housing (20), which has a first valve seat (31), which is closable by a first movable piston (30), wherein the housing has a first and a second port (11; 12), wherein the first port (11) is connected in a fluid-conducting manner to the second port (12) by the first valve seat (31), wherein the pressure at the first port (11) presses the first piston (30) away from the first valve seat (31), wherein the first piston (30) delimits a first opening (32), which can be constantly regulated by a movement of the first piston (30), wherein the first piston (30) delimits a control chamber (15), wherein the pressure in the control chamber (15) presses the first piston (30) against the first valve seat (31), wherein the second port (12) is connected in a fluid-conducting manner to the control chamber (15) by the first opening (32), wherein a core (45) is present in the valve unit (10) and is at least partially surrounded by a coil (46), wherein a fluid flow from the control chamber (15) to the first port (11) can be regulated by an electric current in the coil (46),
wherein the valve system is **characterized in that** it comprises a logic unit (101, 202, 301, 401), which is configured to receive signals from at least one sensor and from a device for inputting commands and to regulate the electric current in the coil (46) as a result of the data of the sensor and the device for inputting commands; wherein the logic unit (101, 201, 301, 401) is configured, during the passage of the fluid from the second port (12) to the first port (11), to function alternately in a pure monitoring mode, in which it determines a fixed opening of the passage between the second and first port, in particular the maximal opening, and in an active control mode, in which it regulates the opening of the passage in response to the signals of the device for inputting commands (96).

2. System according to Claim 1, which comprises pressure sensors (102, 103, 402, 403) which are integrated in the valve unit (10) and configured to measure the pressure at the first port (11) and second port (12).

3. System according to Claim 2, which comprises a position sensor (404) of a member in the valve unit (10), in particular of the first piston (30).

4. System according to any preceding claim, in which the logic unit (101, 201, 301, 401) is configured to receive signals from an inertia detector (202) or position sensor (302), which can be associated with an actuating drive or cylinder (303) or a machine (203) which comprises the actuating drive or cylinder.

5. System according to any preceding claim, in which a second valve seat (41) is present, which is closable by a second movable piston (40), wherein the second piston (40) is coupled to the core (45), wherein the second piston (40) is pressed against the second valve seat by a spring (47), wherein the movement of the second piston (40) can be constantly regulated by the electric current in the coil (46), wherein a third valve seat (43) is present, which is closable by a third movable piston (42), wherein a first flow path of the fluid from the control chamber (15) through a second opening (44), further through the second valve seat (41) to the first port (11), is present, wherein a second flow path of the fluid from the control chamber (15) through the third valve seat (43) to the first port (11) is present, wherein the second flow path of the fluid bypasses the second valve seat (41), so that the third valve seat (43) is not part of the first flow path, wherein the pressure between the second opening (44) and the second valve seat (41) presses the third piston (42) against the third valve seat (43), wherein the second valve seat (41) is situated at the third piston (42), wherein the second and third valve seat (41; 43) are situated on opposite sides of the third piston (42).

6. System according to Claim 5, in which the first piston (30) delimits a third opening (33), which can be constantly regulated by a movement of the first piston (30), wherein the third opening (33) is situated between the first port (11) and the first valve seat (31) in relation to the fluid flow, wherein the open region of the third opening (33) increases when the first piston (30) is removed from the first valve seat (31).

7. System according to Claim 6, in which the first piston (30) has a tubular end portion (34), wherein the third opening (33) is delimited by at least one radial bore (36a; 36b) in the tubular end portion (34), wherein the first opening (32) is delimited by at least one lug (37) on a circumferential surface (35) of the first piston (30).

8. System according to Claim 7, in which the at least one radial bore (36a; 36b) and at least one lug (37) are situated on opposite sides of the first valve seat (31).

9. System according to Claim 5, in which a fourth valve seat (51) is present, which is closable by a movable closure body (50), wherein the fourth valve seat (51) is part of the first flow path of the fluid and also the second flow path of the fluid, wherein the movable closure body (50) and the third piston (42) have opposite opening directions in relation to the fluid flow.

10. System according to Claim 9, in which the fourth valve seat (51), in relation to the fluid flow, is situated between the third valve seat (43) and the first port (11).

11. System according to any one of the preceding claims, in which a pressure limiting valve (61) is present, which opens a fluid connection from the first control chamber (15) to the third port (13) when the pressure at the second port (12) exceeds a predetermined value, wherein the control chamber (15) is connected in a fluid-conducting manner to the second port (12) by a non-return valve (60), which only enables a flow from the control chamber (15) to the second port (12).

12. System according to any one of the preceding claims, in which the characteristic curve (70) of the open region of the first opening (32) in relation to the position of the first piston (30) has a first portion (71), which begins at the closed first valve seat (31), wherein it increases linearly from zero with a first slope (73), wherein it continues through a second portion (72), which increases linearly with a second slope (74), wherein the value of the second slope (74) is at least double, preferably at least four times, that of the first slope (73) .

13. System according to Claim 11, in which the housing has a fourth port (14), which is connected in a fluid-conducting manner to the second port (12) by a fourth opening (62), wherein a fluid connection between the fourth port (14) and the third port (13) is closable by a threaded plug (16).

14. System according to Claim 5 or any one of Claims 6-13 if dependent on Claim 5, in which the housing (20) has a first, a second and a third outer surface (11; 12; 13), which are flat and mutually orthogonal in pairs, wherein the first port (11) is situated on the first outer surface (21), wherein the second port (12) is situated on the second outer surface (22), wherein the first piston (30) is movable perpendicularly to the first outer surface (21), wherein the second and the third piston (40; 42) are movable perpendicularly to the third outer surface (23) .

## Revendications

1. Système de vanne, qui comporte une unité de vanne (10), laquelle est pourvue d'un boîtier (20) qui possède un premier siège de vanne (31), lequel peut être fermé par un premier piston mobile (30), le boîtier possédant un premier et un deuxième orifice (11 ; 12), le premier orifice (11) étant relié fluidiquement au deuxième orifice (12) par le premier siège de vanne (31), la pression au niveau du premier orifice (11) repoussant le premier piston (30) du premier siège de vanne (31), le premier piston (30) délimitant une première ouverture (32) qui peut être régulée de manière constante par un mouvement du premier piston (30), le premier piston (30) délimitant une chambre de commande (15), la pression dans la chambre de commande (15) poussant le premier piston (30) contre le premier siège de vanne (31), le deuxième orifice (12) étant relié fluidiquement à la chambre de commande (15) par la première ouverture (32), un noyau (45) étant présent dans l'unité de vanne (10), lequel est au moins partiellement entouré par une bobine (46), un flux de fluide de la chambre de commande (15) vers le premier orifice (11) pouvant être régulé par un courant électrique dans la bobine (46),
le système de vanne étant **caractérisé en ce qu'**il comporte une unité logique (101, 202, 301, 401), laquelle est configurée pour recevoir des signaux d'au moins une sonde et d'un dispositif servant à la saisie d'instructions et pour réguler le courant électrique dans la bobine (46) en réponse aux données de la sonde et du dispositif servant à la saisie d'instructions ; l'unité logique (101, 201, 301, 401) étant configurée pour, pendant le passage du fluide du deuxième orifice (12) vers le premier orifice (11), fonctionner en alternance dans un mode de surveillance pur avec lequel elle détermine une ouverture fixe du passage entre le premier et le deuxième orifice, notamment l'ouverture maximale, et dans un mode de contrôle actif avec lequel elle régule l'ouverture du passage en réaction aux signaux du dispositif servant à la saisie d'instructions (96).

2. Système selon la revendication 1, lequel comprend des capteurs de pression (102, 103, 402, 403) intégrés dans l'unité de vanne (10) et configurés pour mesurer la pression au niveau du premier (11) et du deuxième (12) orifice.

3. Système selon la revendication 2, lequel comprend un capteur de position (404) d'un organe dans l'unité de vanne (10), en particulier du premier piston (30).

4. Système selon l'une quelconque des revendications précédentes, avec lequel l'unité logique (101, 201, 301, 401) est configurée pour recevoir des signaux d'un détecteur inertiel (202) ou d'un capteur de position (302) qui peut être associé à un actionneur ou un cylindre (303) ou à une machine (203) qui comprend l'actionneur ou le cylindre.

5. Système selon l'une quelconque des revendications précédentes, avec lequel un deuxième siège de vanne (41) est présent, lequel peut être fermé par un deuxième piston mobile (40), le deuxième piston (40) étant couplé au noyau (45), le deuxième piston (40) étant pressé contre le deuxième siège de vanne par un ressort (47), le mouvement du deuxième piston (40) pouvant être régulé de manière constante par le courant électrique dans la bobine (46), un troisième siège de vanne (43) étant présent, lequel peut être fermé par un troisième piston mobile (42), un premier trajet d'écoulement du fluide depuis la chambre de commande (15) à travers une deuxième ouverture (44), puis à travers le deuxième siège de vanne (41) jusqu'au premier orifice (11) étant présent, un deuxième trajet d'écoulement du fluide depuis la chambre de commande (15) à travers le troisième siège de vanne (43) jusqu'au premier orifice (11) étant présent, le deuxième trajet d'écoulement du fluide contournant le deuxième siège de vanne (41), de sorte que le troisième siège de vanne (43) ne fait pas partie du premier trajet d'écoulement, la pression entre la deuxième ouverture (44) et le deuxième siège de vanne (41) poussant le troisième piston (42) contre le troisième siège de vanne (43), le deuxième siège de vanne (41) étant situé au niveau du troisième piston (42), les deuxième et troisième sièges de vanne (41 ; 43) étant situés sur des côtés opposés du troisième piston (42).

6. Système selon la revendication 5, avec lequel le premier piston (30) délimite une troisième ouverture (33), laquelle peut être régulée de manière constante par un mouvement du premier piston (30), la troisième ouverture (33) étant située entre le premier orifice (11) et le premier siège de vanne (31) du point de vue du flux de fluide, la zone ouverte de la troisième ouverture (33) augmentant lorsque le premier piston (30) est éloigné du premier siège de vanne (31).

7. Système selon la revendication 6, avec lequel le premier piston (30) comprend une portion d'extrémité tubulaire (34), la troisième ouverture (33) étant délimitée par au moins un alésage radial (36a ; 36b) dans la portion d'extrémité tubulaire (34), la première ouverture (32) étant délimitée par au moins un œillet (37) sur une surface circonférentielle (35) du premier piston (30).

8. Système selon la revendication 7, avec lequel l'au moins un alésage radial (36a ; 36b) et ledit l'au moins un œillet (37) sont situés sur des côtés opposés du premier siège de vanne (31).

9. Système selon la revendication 5, avec lequel un quatrième siège de vanne (51) est présent, lequel peut être fermé par un corps de fermeture mobile (50), le quatrième siège de vanne (51) faisant partie du premier trajet d'écoulement du fluide et aussi du deuxième trajet d'écoulement du fluide, le corps de fermeture mobile (50) et le troisième piston (42) présentant des directions d'ouverture opposées du point de vue du flux de fluide.

10. Système selon la revendication 9, avec lequel le quatrième siège de vanne (51) est situé entre le troisième siège de vanne (43) et le premier orifice (11) du point de vue du flux de fluide.

11. Système selon l'une quelconque des revendications précédentes, avec lequel une soupape de limitation de pression (61) est présente, laquelle ouvre une communication fluidique de la chambre de commande (15) vers un troisième orifice (13) lorsque la pression au niveau du deuxième orifice (12) dépasse une valeur prédéterminée, la chambre de commande (15) étant reliée fluidiquement au deuxième orifice (12) par un clapet anti-retour (60) qui permet uniquement un flux de la chambre de commande (15) vers le deuxième orifice (12).

12. Système selon l'une quelconque des revendications précédentes, avec lequel la courbe caractéristique (70) de la zone ouverte du premier orifice (32) du point de vue de la position du premier piston (30) présente une première portion (71) qui commence au niveau du premier siège de vanne (31) fermé, celle-ci augmentant linéairement de zéro avec une première pente (73), se poursuivant par une deuxième portion (72) qui augmente linéairement avec une deuxième pente (74), la deuxième pente (74) étant au moins le double, de préférence au moins le quadruple, par rapport à la première pente (73).

13. Système selon la revendication 11, avec lequel le boîtier possède un quatrième orifice (14), lequel est relié fluidiquement au deuxième orifice (12) par une quatrième ouverture (62), une liaison fluidique entre le quatrième orifice (14) et le troisième orifice (13) pouvant être fermée par un bouchon fileté (16).

14. Système selon la revendication 5 ou l'une des revendications 6 à 13, si elle est dépendante de la revendication 5, avec lequel le boîtier (20) possède une première, une deuxième et une troisième surfaces extérieures (11 ; 12 ; 13), lesquelles sont plates et perpendiculaires deux à deux, le premier orifice (11) étant situé sur la première surface extérieure (21), le deuxième orifice (12) étant situé sur la deuxième surface extérieure (22), le premier piston (30) étant mobile perpendiculairement par rapport à la première surface extérieure (21), les deuxième et troisième pistons (40 ; 42) étant mobiles perpendiculairement par rapport à la troisième surface extérieure (23).
